# EUROPEAN PATENT SPECIFICATION

(11) **EP 2 527 226 B1**
(45) Date of publication and mention of the grant of the patent: **28.02.2018**
(21) Application number: 12161589.2
(22) Date of filing: 27.03.2012
(51) Int. Cl.: B61L 3/12, B61L 23/00, B61L 23/06, B61L 23/10

(54) **Railway section delimiting using portable terminal**
Eisenbahnabschnitt-Beschränkung unter Verwendung eines tragbaren Endgeräts
Délimitation d'une section de chemin de fer utilisant un terminal portable

(30) Priority: 27.05.2011 GB 201109002; 27.09.2011 GB 201116584
(43) Date of publication of application: 28.11.2012
(73) Proprietor: Siemens Rail Automation Holdings Limited, Frimley, Camberley, Surrey GU16 8QD (GB)
(72) Inventor: Parker, Peter, Wiltshire, SN14 0QG (GB)
(74) Representative: Maier, Daniel Oliver

(56) References cited:
- EP-A1- 0 793 191
- DE-A1-102007 006 130
- GB-A- 2 248 512
- GB-A- 2 431 034

## Description

The present invention relates to a method for delimiting a section of a railway to enable operating restrictions to be performed at the section, a method for managing railway possessions, a method for applying a temporary speed restriction at a section of a railway and a portable, wireless terminal.

For the avoidance of doubt, throughout this document, the term "portable" is to be understood to mean "man-portable", i.e. capable of being picked up and carried readily by an average human being and thus being transported under the human's own power.

### Background

Railway availability is highly dependent upon the correct operation of various items of trackside equipment. The following description considers operation of points and point machines in particular, however the infrastructure control uses extend to include all trackside infrastructure / equipment including, for example, level crossings, signals, de-railers, staff crossings, point heaters, isolation switches (load breaking and off-load devices), traction power equipment, public address equipment, passenger information display equipment, lifts, escalators, heating ventilation and air conditioning (HVAC) equipment, low voltage power equipment (e.g. UPS), platform screen doors and any other remote-controllable trackside infrastructure / equipment.

The term "possession management" relates to the use of a section of railway track. For example, if a train is passing through the track (i.e. during normal operation), the train is in possession of that section of track. Conversely, if maintenance for example is required at a track section, then the possession of the section must be managed to ensure that staff can work safely and that staff and equipment at the section are accounted for.

The following discussion refers to a "PICOP", the person in charge of possession. This is an operative who will be at the relevant possession section, controlling local operations. The document GB 2 431 034 A is disclosing a device for this purpose.

Currently, wired forms of 'hand-held terminals' (HHTs) are used to facilitate possession management. However, this implementation is limited for the following main reasons:
- Voice command or other manual means must be used to control infrastructure during possessions and is at times cumbersome, especially if repeated operations are required;
- Possessions are often remote, and the enabling of communications to trackside equipment locations / buildings may either increase the possession boundaries or increase the number of staff required to work in the possession;
- Manual methods can become a distraction to the signaller (e.g. control or dispatch centre operator);
- Manual methods to log staff onto the possession work team are used and rely wholly on voice communications;
- Manual methods rely on the PICOP to accurately state their location;
- Manual methods rely on the PICOP following a written procedure, thereby increasing the risk of error that may result in an unsafe occurrence; and
- Manual methods rely on the signaller controlling the infrastructure which the PICOP intends - i.e. there is a high risk of incorrect infrastructure operation that may result in damage to equipment or injury to workers.

### Aims of the invention

It is an aim of the present invention to provide a method for delimiting a section of a railway to enable operating restrictions to be performed at the section, enabling for example possession management and / or the application of temporary speed restrictions, which overcomes the problems associated with the known methods outlined above.

This aim is achieved by utilising a portable, wireless, terminal to interface to wireless communication tags, for example radio frequency identity (RF-ID) tags, to prove location of possession boundaries and to prove the equipment to be controlled. In addition to this interface, the portable terminal may manage the workflow procedures to control selected infrastructure within the possession boundary without intervention from the signaller. The workflow procedures may also be used to overcome the risks of controlling incorrect equipment. Barcode readers may be used to 'log-on' staff to the work party by scanning a barcode on their ID card. The staff competencies may also be verified by using this barcode.

The present invention also provides for the tracking of tools and equipment.

In accordance with a first aspect of the present invention there is provided a method as defined by claim 1. The portable terminal comprises remote wireless communication means for enabling communication between the terminal and a remote location.

The method may comprise the step of denoting an additional section boundary by enabling communication between the portable terminal and a second wireless communication tag, the position of said second tag denoting the additional section boundary.

The method may comprise the step of providing at least one additional portable terminal comprising wireless tag communication means operable to delimit an additional section boundary by enabling communication between the additional portable terminal and a second wireless communication tag. Each wireless communication tag may comprise an RF-ID tag, and the wireless tag communication means of the or each portable terminal may comprise an RF-ID receiver.

The step of enabling communication between the portable terminal and the wireless communication tag may comprise positioning the portable terminal proximate the tag to enable communication therebetween.

During communication between the portable terminal and the tag, the ID of the tag is transmitted to the portable terminal and comprises the step of transmitting the received tag ID from the portable terminal to the remote location.

At least one of said plurality of tags may be mounted on a catenary mast provided along the railway.

The method may further comprise the step of confirming the possession section boundary by sending the ID of the tag at that boundary to a control application at the remote location for confirmation.

The method may further comprise the step of logging on operatives at the possession section using the portable terminal to record log-on information for each operative. In this case, the method may comprise the step of verifying the log-on information by sending the log-on information to the control application for verification.

Identification means may be provided on one or more infrastructure elements of the railway, said identification means being readable by the portable terminal.

Identification means may be provided on one or more railway equipment items, said identification means being readable by the portable terminal. The portable terminal may be provided with location detection means.

Key features of the system include:
Use of tags to identify possession limits during setup, handover and hand back of possessions.
Use of a secondary location system (GPS / GPRS / alternate RF-ID tag) to warn staff upon leaving the safe working limits.
Control of infrastructure elements within a possession boundary using a portable terminal.
Use of a portable terminal for possession management.
Use of a portable terminal to record protection staff involved with a possession and to record the work party for the possession.
Use of a portable terminal to verify staff competencies auto populating possession records, providing automated sign on to alternate systems and automated data entry into juridical recording systems.
Use of predefined automated workflow procedures to manage possessions.
Use of a portable terminal for application / removal / modification of temporary speed restrictions
Use of a portable terminal to track tools and equipment used in possessions.

The use of RF-ID tags is preferred, as these are already commonly used in many industries to identify items of plant equipment for the purposes of asset management.

The invention will now be described with reference to the accompanying drawings, of which:

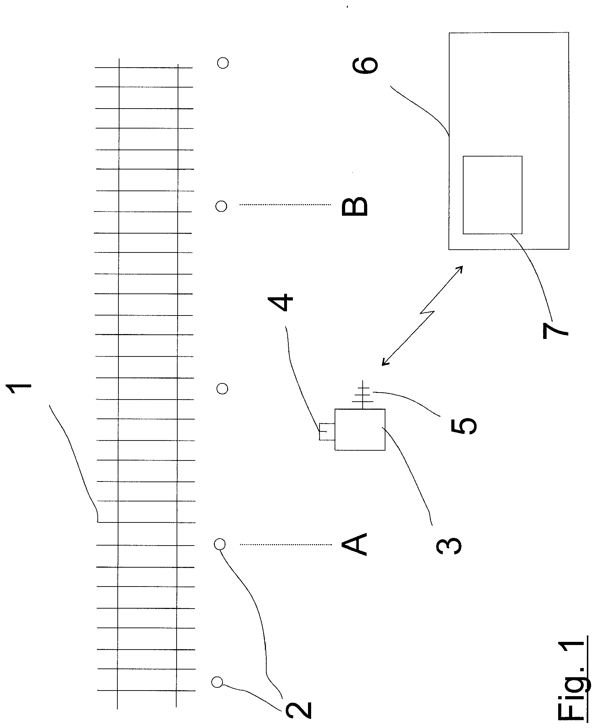

Fig. 1 schematically shows a railway length.

### Railway Application of RF-ID Tags

An indicative general arrangement of RF-ID tags on railway infrastructure is shown in Figure 1.

Fig. 1 shows a length of railway 1. A series of catenary masts 2 is located along and adjacent to the railway 1, these being standard with electrified railways. Each mast 2 has a respective RF-ID tag mounted thereon.

Alternative / additional locating methods may include short 'stakes' with the RF-ID tag integrated or attached to such infrastructure.

RF-ID tags may also / alternatively be integrated into trackside buildings either internally, externally or both.

RF-ID tags can also be integrated into or attached to infrastructure elements such as level crossings, point machines, de-railers, point heating cubicles, isolation switches (load breaking and off-load devices), traction power equipment, public address equipment, passenger information display equipment, lifts, escalators, heating ventilation and air conditioning (HVAC) equipment, low voltage power equipment (e.g. uninterruptible power supply (UPS)), platform screen doors, axle counter heads, balises, APR transponders, automatic warning system (AWS) / train protection and warning system (TPWS) grids signal heads / masts, traction power substations (including individual equipments within the substations)

Furthermore, RF-ID tags and / or barcodes can be applied to line replaceable units (LRUs) such as electronic interlocking cards, local human machine interface (HMI) units / workstations etc.

Here, the desired section to be delimited is that lying between boundary points A and B, denoted by the masts (and hence tags) at those points. It should be noted that the boundary points need not be located at adjacent masts.
A portable terminal 3 is shown, having wireless tag communication means, i.e. RF-ID reading means 4. The portable terminal is a wireless device capable of being carried by an operative by hand. To this end, terminal 3 is battery-powered. Included within the terminal, in addition to RF-ID reading means 4, are a remote wireless bi-directional communication means (here schematically shown as a radio transceiver) 5 for enabling wireless communication with a remote location 6, a barcode / QR code scanner or the like (not shown), a processor (not shown), and human interface means (not shown), such as a keypad, display screen, touch screen etc. The remote location includes a SIL 2 control centre software application 7 which, as is known in the art, would typically be controlled by a signaller at the remote location 6. Application 7 is operable to control a railway interlocking (not shown), and is operable to apply temporary speed restrictions to the railway.

### RF-ID Tags for Possession Boundary Proving and Barcode Staff Log-on

As described above, RF-ID tags are substantially evenly spaced along the rail infrastructure to 'divide' the railway 1 into manageable segments, and as now described facilitates possession management.

Adaptation will be required to the end user's possession planning system to allocate the new possession location markers, i.e. the tags, to be used by the system.

According to an embodiment of the present invention, a method for possession setup is as follows:
- PICOP receives possession orders via standard means (e.g. email, paper etc) as will be known the art.
- The PICOP initiates the possession process by logging into portable terminal 3 and entering the possession credentials using the human interface means.
- The possession credentials are transmitted to remote location 6 which uses the SIL 2 control centre software application 7 for automatic verification. Assuming verification is successful, approval is granted by the application to move to the next workflow step.
- The next step in the workflow is to scan the RF-ID tag at the 'beginning' boundary of the possession limit. This is achieved by moving the portable terminal 3 sufficiently close to the relevant tag to enable communication therebetween, such that the terminal 3 receives the ID information of the tag. This information is transmitted to the remote control centre software application 7 and verified automatically. Assuming verification is successful, approval is granted by the application to move to the next workflow step.
- The PICOP then scans the RF-ID tag at the 'end' boundary of the possession to obtain that tag's ID information. This information is transmitted to the remote control centre software application 7 and verified automatically. Assuming verification is successful, approval is granted by the application to move to the next workflow step.
- If this is not feasible, for example due to long distances, another person at the 'end' boundary can use their own dedicated portable terminal to scan the 'end' boundary tag. This particular use case (i.e. another person at the 'end' limit) is similar to the single PICOP method, however trackside information is gathered from these two portable terminals rather than a single terminal.
- The next workflow step is to log on the work party who will be working at the possession. To facilitate this, each member of the party is provided with an individual identity information storage device. In a relatively simple embodiment, a barcode or QR code or the like may be used. Alternatively, an RF-ID tag or the like could be employed. The portable terminal must be equipped to read this information to obtain the required log-on information, which is transmitted to the remote control centre software application 7 and verified automatically. This log-on will also verify that the required protection staff are present and accounted for before granting the possession. Assuming verification is successful, approval is granted by the application to move to the next workflow step.
- Once the staff log-on is complete, the control centre software application 7 issues a 'please confirm' instruction to the portable terminal 3 for the PICOP to accept or reject. If accepted, the control centre software application 7 performs the necessary protection controls on the infrastructure, as will be apparent to those skilled in the art.
- Once the protection controls are completed, the control centre software application 7 issues a 'completed' message to the portable terminal 3 advising the PICOP that the possession is in place.
- A timer is started both on the portable terminal 3 and the control centre software application 7 that counts down the possession time. Alarms can be configured to alert the PICOP and signaller of the 'T minus' times for possession handover or hand back.
- The next workflow steps are highly dependent on individual customer working practices and procedures, and so will not be described further.

Possession hand back is essentially the reverse of the setup procedure detailed above.

For possession handover, where a new team takes control of the possession, the current and new PICOPs follow a customer-specific process that is controlled by a separate workflow. Staff identification takes place by the above stated barcode / RF-ID tag method and location proving is achieved by scanning the boundary RF-ID tags.

### Secondary Location Proving

In some cases it may be required to use secondary location proving to identify team staff locations.

The secondary location proving is used primarily to warn the PICOP that he is outside of the possession boundary limits delimited as described above. If the PICOP for example leaves the possession limits, a warning alarm is raised on the portable terminal 3 carried by the PICOP. The location information is also transmitted by the terminal 3 to the remotely located control centre software application 7, causing an alarm to be activated at the remote location 6 also. In this way, both the PICOP and signaller are warned that the PICOP is outside of the safe working zone. Similarly, any other team member that carries a portable terminal will also be subject to secondary location proving in this way.

Various methods may be employed for this purpose, of which the currently preferred are:
- Global positioning system (GPS) location using the portable terminal 3; or
- General packet radio service (GPRS) location using the portable terminal 3.

Other wireless locating techniques may however equally be used.

Whichever method is applied, the secondary location proving may be integrated into the workflow process.

To prevent alarms, a workflow process is implemented that will require the PICOP to record the reason for leaving the possession and nominate a person in charge in their absence (if allowed by the railway operational rules). An additional / alternative method to identify if the PICOP is outside of the possession boundaries may be enabled by using long range RF-ID tags to mark the boundaries. If long range RF-ID tags are used (not shown), the portable terminal 3 can detect RF-ID tags that are outside of the possession boundary without being held adjacent to the tag, and thus raise the appropriate alarms.

### Control of Infrastructure

Possessions are often used to protect workers whilst they maintain or improve the rail infrastructure. In the case of maintenance or improvement works, it is often required that the infrastructure be operated to perform testing and verification of the activities prior to handing back the infrastructure for normal railway operations.

The portable terminal 3 and RF-ID tags may be used to manage the control of infrastructure elements.

The following scenario concentrates on the operation of a set of points, however similar methodology can be applied to all controllable infrastructure elements as listed in the "Background" section above.

An RF-ID tag is integrated with or attached to each point machine. Assuming the possession is required to maintain or replace the point machine, the work party will need to verify its correct operation after the work is complete. Current practice is either to operate the points directly from a technician's facility at the interlocking or to request the points to be operated by the signaller remotely.

A control centre software application 7 and portable terminal 3 workflow is configured to dynamically identify the points within the possession limits delimited as set out above and authorise those for control by the portable terminal 3.

Once the possession setup is satisfactorily completed, the points operation workflow becomes available for the PICOP to use. In use, the method is as follows:
- PICOP selects the appropriate workflow (e.g. operate points) on the portable terminal 3, and this is transmitted to remote location 6. The control centre software application 7 verifies that this workflow is available for this possession type and approval is granted to move to the next workflow step, this approval being transmitted to the terminal 3.
- The PICOP scans the RF-ID tag of the point machine using the terminal 3 and transmits this identification information to the remote location 6. The control centre software application 7 uses the identification information to verify that the points are within the possession limits and approval is granted to move to the next workflow step, this approval being transmitted to the terminal 3.
- The PICOP is presented, by the terminal 3, with the current state (i.e. position) of the points as identified by the control centre software application 7 and transmitted to the terminal. The PICOP confirms or rejects the points current state on the terminal 3. If confirmed as true, the next workflow step is presented to the PICOP.
- The next step in the workflow is for the PICOP to select operation of the points to the opposite state. This request is sent from the terminal 3 to the control centre software application 7, which processes the control as if it was received directly from the signaller's HMI. The control centre software application 7 issues a 'please confirm' request to the portable terminal 3 for the PICOP to accept or reject.
- If accepted, the acceptance is transmitted to the application 7, which then issues the infrastructure command to the railway interlocking to move the points. The point status is fed back to the control centre software application 7 from the interlocking and then from the control centre software application to the portable terminal 3.
- The PICOP then confirms or rejects the status on the portable terminal 3.

If at any time the PICOP or the control centre software application 'reject' a request, the workflow is either paused with advice given to the PICOP to investigate and remedy a fault, or the workflow is cancelled. These actions are configurable and largely dependent on the individual railway operation's rules.

### Verification of Staff Competencies

Currently, known railway management systems use manual means of staff tracking during possessions is used and this proves to be timely and cumbersome. Often more than one 'sign on' is required to identify the staff and competencies separately in some cases. Most railways utilise ID card systems with photographic identification and a series of codes to readily identify staff and their associated competencies. This at times can be disjointed between trackside and non-trackside competency requirements.

This procedure may be simplified and streamlined by the present invention. The portable terminal 3 is used either to obtain an individual's identification information, including information on the individual's competencies, directly from an identification unit retained by the individual, for example by: scanning a barcode / QR code or the like, reading a magnetic strip from an ID card, or scanning an individual's own RF-ID tag. The identification information is then used to auto-populate possession management records with, for example, the staff member's name, competencies and duty allocation (e.g. protection staff). This automated record can then be presented to additional 'sign on' systems as well as be used to confirm or reject a staff member's allocated duty (in the case of competency expiration).

Automated and electronic recording also facilitates accurate and timely data entry into juridical recording systems should this be required in the future for incident investigation.

### Temporary Speed Restrictions (TSRs) from a Portable Terminal

At times, it may be safe to use a railway which is undergoing repair for example, but only in a degraded mode or by restricting the traffic speed through a particular section of the infrastructure.

In the case of electronic communications-based signalling technologies such as communications-based train control, "distance to go" radio and European rail traffic management system (ERTMS) and track code signalling technologies, current techniques require temporary speed restrictions (TSRs) to be applied from a nominated terminal whereby the user enters the start and end limits of the restriction and the required speed.

The present invention enables the use of portable terminal 3 to apply TSRs to the railway infrastructure using the RF-ID tags to delimit the start and end boundaries of the required TSR, the tags being spaced as set out above.

The method of use for temporary speed restriction application is as follows:
- The user (e.g. PICOP) identifies the requirement to implement a TSR.
- The user initiates the TSR process by logging into the portable terminal 3 and selecting a TSR option, which is then transmitted to SIL 2 control centre software application 7.
- The TSR option is verified automatically by application 7, and approval is granted to move to the next workflow step, the approval being sent to terminal 3.
- The next step in the workflow is to scan the RF-ID tag at the 'start' of the TSR limit using the terminal 3 as outlined above. The tag ID is transmitted to application 7 for automatic verification by the application and entered into a signalling system TSR manager application / device (a separate, standard component, not shown) by the application 7. Approval is then granted to move to the next workflow step, this approval being sent to terminal 3.
- The user then scans the RF-ID tag at the 'end' of the TSR limit with terminal 3. The tag ID is transmitted to application 7 for automatic verification by the application and entered into a signalling system TSR manager application / device by the application 7. Approval is then granted to move to the next workflow step, this approval being sent to terminal 3.
- The user then enters the TSR 'speed' and any other required information (e.g. the line or train type etc) into the terminal 3. This information is sent to application 7 and verified automatically. It is then entered into the signalling system TSR manager application / device by the application 7.
- The signalling system TSR manager application / device then applies and confirms the TSR to the application 7. The application 7 then confirms to the portable terminal 3, and thus the user, that the TSR is in place.

Confirmation from the signaller may be required in some of the process steps above. This is configurable and is largely dependent on individual railway operations' rules.

### Tracking Tools and Equipment

Many accidents are caused by work teams leaving tools and equipment in unsafe places upon completion of a possession. Accidents can occur when staff either attempt to recover lost or misplaced tools / equipment or when the tools / equipment prevents the safe operation of the rail infrastructure (e.g. a spanner fouling a set of points).

The use of portable terminal 3 to 'check in' and 'check out' tools / equipment from use in a possession can be integrated into the possession management workflow described above to ensure that all tools / equipment is accounted for and therefore minimising the risk of a dangerous occurrence.

To enable this integration, the tools / equipment of concern are provided with identification information storing means, for example a barcode / QR code or the like, a magnetic strip, or an RF-ID tag etc, such that this storage means may be interrogated by the terminal 3.

It is currently not seen as practical to thus identify all tools, so initially at least only larger tools / equipment (e.g. tampers, rail grinders etc) could be barcoded for automated check in and check out. In the case of small hand tools, a 'pick' list is implemented to allow the PICOP to select the tool types and quantities being taken into the possession.

The above-described embodiments are exemplary only, and various alternatives will be apparent to those skilled in the art.

## Claims

1. A method for managing railway possessions comprising delimiting a section of a railway for possession to enable operating restrictions to be performed at the section, comprising the steps of:
providing a plurality of wireless communications tags at intervals along the railway;
providing a portable, wireless terminal comprising wireless tag communication means;
and delimiting a section boundary by enabling communication between the portable terminal and a wireless communication tag, the position of said tag denoting the section boundary, wherein the portable terminal comprises remote wireless communication means for enabling communication between the terminal and a remote location, and wherein during communication between the portable terminal and the tag, the ID of the tag is transmitted to the portable terminal and the method comprises the step of transmitting the received tag ID from the portable terminal to the remote location.

2. A method according to claim 1, comprising the step of denoting an additional section boundary by enabling communication between the portable terminal and a second wireless communication tag, the position of said second tag denoting the additional section boundary.

3. A method according to any preceding claim, comprising the step of providing at least one additional portable terminal comprising wireless tag communication means operable to delimit an additional section boundary by enabling communication between the additional portable terminal and a second wireless communication tag.

4. A method according to any preceding claim, further comprising the step of confirming the possession section boundary by sending the ID of the tag at that boundary to a control application at the remote location for confirmation.

5. A method according to any preceding claim, further comprising the step of logging on operatives at the possession section using the portable terminal to record log-on information for each operative.

6. A method according to any preceding claim, comprising the step of verifying the log-on information by sending the logon information to the control application for verification.

7. A method according to any preceding claim, wherein identification means are provided on one or more infrastructure elements of the railway, said identification means being readable by the portable terminal.

8. A method according to any preceding claim, wherein identification means are provided on one or more railway equipment items, said identification means being readable by the portable terminal.

9. A portable, wireless terminal to carry out the method according to any of claims 1 to 8.

## Patentansprüche

1. Verfahren zum Verwalten von Eisenbahnsperrungen, welches das Abgrenzen eines Abschnitts einer Bahnstrecke zur Sperrung umfasst, um zu ermöglichen, dass Betriebsbeschränkungen an dem Abschnitt vorgenommen werden, die folgenden Schritte umfassend:
Bereitstellen mehrerer Funketiketten in Intervallen entlang der Bahnstrecke;
Bereitstellen eines tragbaren, drahtlosen Endgeräts, das Funketiketten-Kommunikationsmittel umfasst; und
Festlegen einer Abschnittsgrenze durch Ermöglichen einer Kommunikation zwischen dem tragbaren Endgerät und einem Funketikett, wobei die Position dieses Etiketts die Abschnittsgrenze kennzeichnet, wobei das tragbare Endgerät Fernfunk-Kommunikationsmittel zum Ermöglichen einer Kommunikation zwischen dem Endgerät und einem entfernten Ort umfasst, und wobei während der Kommunikation zwischen dem tragbaren Endgerät und dem Etikett die Kennung des Etiketts zu dem tragbaren Endgerät übertragen wird und das Verfahren den Schritt des Übertragens der empfangenen Etikettkennung von dem tragbaren Endgerät zu dem entfernten Ort umfasst.

2. Verfahren nach Anspruch 1, welches den Schritt des Kennzeichnens einer zusätzlichen Abschnittsgrenze durch Ermöglichen einer Kommunikation zwischen dem tragbaren Endgerät und einem zweiten Funketikett umfasst, wobei die Position dieses zweiten Etiketts die zusätzliche Abschnittsgrenze kennzeichnet.

3. Verfahren nach einem der vorhergehenden Ansprüche, welches den Schritt des Bereitstellens wenigstens eines zusätzlichen tragbaren Endgeräts umfasst, das Funketiketten-Kommunikationsmittel umfasst, die in der Lage sind, eine zusätzliche Abschnittsgrenze durch Ermöglichen einer Kommunikation zwischen dem zusätzlichen tragbaren Endgerät und einem zweiten Funketikett festzulegen.

4. Verfahren nach einem der vorhergehenden Ansprüche, welches den Schritt des Bestätigens der Sperrabschnittsgrenze durch Senden der Kennung des Etiketts an dieser Grenze an eine Steuerungsanwendung an dem entfernten Ort zur Bestätigung umfasst.

5. Verfahren nach einem der vorhergehenden Ansprüche, welches ferner den Schritt des Anmeldens von Arbeitern an dem Sperrabschnitt unter Verwendung des tragbaren Endgeräts, um Anmeldeinformationen für jeden Arbeiter aufzuzeichnen, umfasst.

6. Verfahren nach einem der vorhergehenden Ansprüche, welches den Schritt des Überprüfens der Anmeldeinformationen durch Senden der Anmeldeinformationen an die Steuerungsanwendung zur Überprüfung umfasst.

7. Verfahren nach einem der vorhergehenden Ansprüche, wobei Identifikationsmittel an einem oder mehreren Infrastrukturelementen der Bahnstrecke vorgesehen werden, wobei diese Identifikationsmittel durch das tragbare Endgerät lesbar sind.

8. Verfahren nach einem der vorhergehenden Ansprüche, wobei Identifikationsmittel an einer oder mehreren Eisenbahneinrichtungen vorgesehen werden, wobei diese Identifikationsmittel durch das tragbare Endgerät lesbar sind.

9. Tragbares, drahtloses Endgerät zum Durchführen des Verfahrens nach einem der Ansprüche 1 bis 8.

## Revendications

1. Procédé de gestion des occupations de voies, consistant à délimiter un tronçon de voie ferrée à occuper pour permettre que des restrictions d'exploitation soient mises en oeuvre au niveau du tronçon, comprenant les étapes consistant :
à mettre à disposition une pluralité d'étiquettes de communication sans fil par intervalles le long de la voie ferrée ;
à mettre à disposition un terminal sans fil portatif comprenant un moyen de communication avec des étiquettes sans fil, et
à délimiter une limite de tronçon en activant la communication entre le terminal portatif et une étiquette de communication sans fil, la position de ladite étiquette indiquant la limite du tronçon, étant entendu que le terminal portatif comprend un moyen de communication sans fil à distance pour permettre la communication entre le terminal et un emplacement distant, et étant entendu que, pendant la communication entre le terminal portatif et l'étiquette, l'ID de l'étiquette est transmis au terminal portatif et que le procédé comprend l'étape consistant à transmettre, du terminal portatif à l'emplacement distant, l'ID d'étiquette reçu.

2. Procédé selon la revendication 1, comprenant l'étape consistant à indiquer une limite de tronçon additionnelle en activant la communication entre le terminal portatif et une deuxième étiquette de communication sans fil, la position de ladite deuxième étiquette indiquant la limite de tronçon additionnelle.

3. Procédé selon l'une quelconque des revendications précédentes, comprenant l'étape consistant à mettre à disposition au moins un terminal portatif additionnel comprenant un moyen de communication avec des étiquettes sans fil utilisable pour délimiter une limite de tronçon additionnelle en activant la communication entre le terminal portatif additionnel et une deuxième étiquette de communication sans fil.

4. Procédé selon l'une quelconque des revendications précédentes, comprenant par ailleurs l'étape consistant à confirmer la limite du tronçon à occuper en envoyant pour confirmation l'ID de l'étiquette située au niveau de cette limite à une application de contrôle située à l'emplacement distant.

5. Procédé selon l'une quelconque des revendications précédentes, comprenant par ailleurs l'étape consistant à connecter des travailleurs au niveau du tronçon à occuper en utilisant le terminal portatif pour enregistrer des informations de connexion pour chaque travailleur.

6. Procédé selon l'une quelconque des revendications précédentes, comprenant l'étape consistant à vérifier les informations de connexion en envoyant pour vérification les informations de connexion à l'application de contrôle.

7. Procédé selon l'une quelconque des revendications précédentes, dans lequel les moyens d'identification sont mis à disposition sur un ou plusieurs éléments de l'infrastructure de la voie ferrée, lesdits moyens d'identification pouvant être lus par le terminal portatif.

8. Procédé selon l'une quelconque des revendications précédentes, dans lequel les moyens d'identification sont mis à disposition sur un ou plusieurs éléments de l'équipement de la voie ferrée, lesdits moyens d'identification pouvant être lus par le terminal portatif.

9. Terminal sans fil portatif servant à exécuter le procédé selon l'une quelconque des revendications 1 à 8.
